(19) Europäisches Patentamt
European Patent Office
Office européen des brevets

(11) **EP 3 233 540 B1**

(12) **FASCICULE DE BREVET EUROPEEN**

(45) Date de publication et mention de la délivrance du brevet:
**06.02.2019 Bulletin 2019/06**

(21) Numéro de dépôt: **15808231.3**

(22) Date de dépôt: **11.12.2015**

(51) Int Cl.:
***B60C 23/06*** (2006.01)

(86) Numéro de dépôt international:
**PCT/EP2015/079458**

(87) Numéro de publication internationale:
**WO 2016/096664 (23.06.2016 Gazette 2016/25)**

(54) **PROCÉDÉ DE DÉTECTION ET D'ALERTE DE L'ÉTAT DE SOUS-GONFLAGE D'UN PNEUMATIQUE**

VERFAHREN ZUR FESTSTELLUNG EINES REIFEN MIT UNTERLUFTDRUCK, UND WARNUNG

METHOD FOR DETECTING AND ALARMING AN UNDER-INFLATED TIRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2014 FR 1462592**

(43) Date de publication de la demande:
**25.10.2017 Bulletin 2017/43**

(73) Titulaire: **Compagnie Générale des Etablissements Michelin**
**63000 Clermont-Ferrand (FR)**

(72) Inventeurs:
• **LEDOUX, Thomas**
**63040 Clermont-Ferrand Cedex 9 (FR)**
• **MARTIN, Denis**
**63040 Clermont-Ferrand Cedex 9 (FR)**
• **HEREDIA, Guillaume**
**63040 Clermont-Ferrand Cedex 9 (FR)**
• **PERNOT, Alexandre**
**63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2006/098714**

## Description

DOMAINE DE L'INVENTION

La présente invention concerne un système de détection et d'alerte de sous-gonflage d'un pneumatique de véhicule. Plus particulièrement, la présente invention est relative à un système externe, c'est-à-dire non embarqué dans le véhicule.

Par « sous-gonflage », on entend une situation dans laquelle la pression du pneumatique est inférieure à une pression recommandée, par exemple en fonction des caractéristiques du pneumatique, des caractéristiques du véhicule ou encore de l'activité du véhicule. Dans la suite de la description, on utilisera indifféremment les termes de « sous-gonflage » ou de « sous-pression ».

Pour surveiller la pression de gonflage des pneumatiques d'un véhicule automobile, on connaît classiquement des systèmes installés directement sur les roues des véhicules, qui déterminent la pression au moyen d'un capteur de pression et qui envoient ensuite l'information par radiofréquence jusqu'à l'électronique centrale du véhicule. Le conducteur est alerté, en cas de sous pression, par un voyant installé sur le tableau de bord du véhicule. Certain système embarqué analyse entre autres l'empreinte laissée sur le sol comme révélateur d'un état de sous-gonflage, comme divulgué dans le document WO 2006/098714 A1, qui peut être alors considéré comme un art antérieur très proche de la présente invention.

On connaît également des systèmes débarqués permettant la mesure de pression de contact des pneumatiques au niveau du sol et estimant à partir de cette mesure, la pression de gonflage dudit pneumatique.

On connait enfin les manomètres manuels, qui permettent une vérification du niveau de pression des pneumatiques par une simple connexion temporaire de ces dispositifs au niveau de la valve de gonflage des roues du véhicule.

La présente invention vise à fournir un système, notamment utilisable par des gestionnaires de flottes de véhicules, et qui puisse s'inscrire dans un système plus global de diagnostic de l'état d'un véhicule et de ses pneumatiques. Or, aucun des systèmes connus ne permet, en l'état, un recoupement avec d'autres informations concernant le véhicule dont la pression des pneumatiques.

Ainsi, l'objectif de la présente invention est de fournir un procédé et un système de détection et d'alerte en cas de sous pression d'un pneumatique d'un véhicule qui soit ergonomique à la fois pour un conducteur de véhicule et pour un gestionnaire de flotte de véhicules.

BREVE DESCRIPTION DE L'INVENTION

Ainsi, l'invention concerne un procédé de détection de l'état de sous-gonflage d'un pneumatique installé sur un véhicule, le procédé comprenant les étapes suivantes :

- l'étape de déterminer une première mesure d'aire de contact d'un premier pneumatique installé sur le véhicule,

- l'étape de déterminer une deuxième mesure d'aire de contact d'un deuxième pneumatique installé sur le véhicule,

- l'étape de comparer la première et deuxième mesure d'aire de contact et d'en déduire une situation de sous-gonflage si l'écart entre les deux mesures est supérieure à un seuil d'alerte prédéterminé.

Ainsi, une différence de pression de gonflage entre deux pneumatiques d'un même essieu est détectée dès que la longueur, ou surface, d'aire de contact d'un des pneumatiques est inférieure à la longueur ou surface d'aire de contact du pneumatique situé à l'autre extrémité dudit essieu.

On a toutefois constaté que dans certaines situations, il est possible que cette différence de longueur et/ou de surface soit due à une mauvaise répartition de la charge transportée par le véhicule. Dans ce cas, la longueur ou surface d'aire de contact d'un pneumatique peut se trouver augmentée par un pur effet de chargement, sans sous pression dudit pneumatique.

Pour remédier à cela et éviter toute fausse détection, dans une réalisation préférentielle, le procédé comprend l'étape d'appliquer un facteur correctif sur la première et/ou deuxième mesure avant l'étape de comparaison. Ce facteur correctif est, par exemple, un coefficient multiplicateur inférieur à un, appliqué à la longueur d'aire de contact la plus élevée.

On a également constaté qu'une sous pression d'un pneumatique sur un essieu de semi-remorque peut se traduire par une augmentation de la longueur et de la surface de l'aire de contact dudit pneumatique mais également induire des variations des longueurs et surfaces des pneumatiques situés sur les autres essieux de la semi-remorque. Ce phénomène est d'autant plus prononcé que la sous pression du pneumatique sous gonflé est importante.

Dans ce cas, il peut être utile d'améliorer l'analyse des longueurs et surfaces d'aire de contact des pneumatiques présent sur la semi-remorque pour identifier le pneumatique étant, de façon la plus probable, en situation de sous gonflage, et ainsi éviter de remonter de fausses alertes à l'utilisateur du véhicule.

Ainsi, dans une réalisation préférentielle, on effectue dans un premier temps la moyenne des longueurs, ou surfaces, d'aires de contact des pneumatiques situés sur chaque côté de la semi-remorque ; et dans un second temps, on compare les deux valeurs obtenues, en recherchant la valeur la plus élevée, afin de déterminer de quel côté de la semi-remorque est situé un éventuel pneumatique sous gonflé.

Une fois identifié le coté de la semi-remorque pour lequel un pneumatique en situation de sous gonflage est le plus probable, on compare les longueurs ou surfaces d'aires de contact des pneumatiques situés sur ledit coté. Le pneumatique pour lequel la situation de sous gonflage est la plus probable est alors celui présentant la longueur ou surface d'aire de contact la plus élevée.

Comme dans les cas précédents, il est possible d'appliquer un facteur correctif aux longueurs ou surfaces d'aire de contact lors de cette ultime comparaison, afin d'éviter d'éventuelles fausses détections.

On a également constaté qu'une sous pression d'un pneumatique sur un essieu équipé de pneumatiques jumelés peut se traduire par une augmentation de la longueur et de la surface de l'aire de contact dudit pneumatique mais également induire des variations des longueurs et surfaces des pneumatiques situés sur les pneumatiques du même essieu. Ce phénomène est d'autant plus prononcé que la sous pression du pneumatique sous gonflé est importante.

A cet effet, l'invention concerne également un procédé destiné à être appliqué à un véhicule comportant au moins un essieu avec le premier et second pneumatique jumelés sur un premier côté du véhicule et un troisième et un quatrième pneumatiques jumelés sur le second côté du véhicule. Le procédé comprend, outre les étapes précédemment décrites, les étapes suivantes :

- l'étape de déterminer une troisième et quatrième mesure d'aire de contact des troisième et quatrième pneumatiques,
- l'étape de calculer une première et une deuxième moyenne des mesures d'aire de contact des pneumatiques situés respectivement sur le premier et le deuxième côté du véhicule,
- l'étape de comparer la première et la seconde moyenne pour déterminer un côté du véhicule comportant un pneu en situation de sous-gonflage.

Dans un autre mode de réalisation, le procédé comprend l'étape d'envoyer un signal d'alerte au conducteur du véhicule et/ou à un serveur distant. De manière préférentielle, l'étape d'alerter le conducteur est mis en oeuvre après plusieurs détections successives d'une situation de sous-gonflage sur un même pneumatique.

En effet, on a constaté que sur certains véhicules, notamment ceux transportant du fret, et donc des chargements de poids importants, il est tout à fait possible que des différences de longueurs ou surfaces d'aires de contact apparaissent compte tenu d'une répartition déséquilibrée de la masse dans ledit véhicule.

Il est donc utile de tenir compte de cette source potentielle d'erreur avant d'alerter le conducteur. Dans un exemple, on effectue plusieurs mesures à des moments différents afin de disposer de relevés réalisés dans des conditions de chargement différentes. Si ces différentes mesures aboutissent toutes à détecter une sous pression potentielle sur le même pneumatique alors la probabilité d'avoir détecté une réelle sous pression augmente et il devient possible d'alerter le conducteur.

De manière préférentielle, le seuil d'alerte est déterminé en fonction d'une activité du véhicule, par exemple son type de chargement, et/ou la monte du pneumatique, et/ou la position du pneumatique sur ledit véhicule.

Comme dans les cas précédents, il est également possible d'appliquer un facteur correctif aux moyennes des longueurs ou surfaces d'aire de contact calculées de part et d'autre de l'essieu muni de pneumatiques jumelés, avant de les comparer. Cela permet également d'éviter de fausses détections qui pourraient être dues à un chargement déséquilibré du véhicule. Ce facteur correctif est, par exemple, un coefficient multiplicateur inférieur à un, appliqué à la moyenne de longueurs ou surface d'aire de contact la plus élevée.

L'invention concerne également un procédé destiné à être appliqué à un véhicule comportant au moins un troisième et quatrième pneumatique monté sur au moins un essieu additionnel sans pneumatiques jumelés, le procédé comprenant en outre les étapes suivantes :

- l'étape de déterminer la totalité des mesure d'aire de contact de la totalité des pneumatiques montés sur les essieux non jumelés,

- l'étape de calculer une première et une deuxième moyenne des mesures d'aire de contact des pneumatiques situés respectivement sur le premier et le deuxième côté du véhicule,

- l'étape de comparer la première et la seconde moyenne pour déterminer un côté du véhicule comportant un pneu en situation de sous-gonflage.

Dans un mode de réalisation particulier, un procédé selon l'invention comprend l'étape de comparer la mesure d'aire de contact d'un pneumatique d'un véhicule à la moyenne des mesures d'aire de contact des autres pneumatiques du véhicule. Dans ce cas, le procédé comprend l'étape d'alerter le conducteur si la mesure d'aire de contact d'un pneumatique est supérieure ou égale, par exemple, à vingt-cinq pourcent de la moyenne des autres mesures d'aires de contact des pneumatiques du même véhicule.

Dans la pratique, ce pourcentage, qui est un coefficient de sécurité permettant d'éviter l'envoi de fausses alertes, peut-être adapté selon le type de véhicule et le type d'activité pour lequel il est employé.

Par exemple, dans le cas des remorques ou semi-remorques, il est bien connu que les activités de messageries et de transport de courrier sont des activités dans lesquelles le fret est peu lourd et réparti de façon équilibré à l'intérieur desdites remorques ou semi-remorques. Dans ce cas, ce pourcentage peut-être plus faible que les vingt-cinq pourcent évoqués précédemment. A l'inverse, les activités de matériels lourds, par exemple le transport de machines-outils, peuvent conduire à des répartitions de masses déséquilibrées entre l'avant et l'arrière d'une semi-remorque ou entre les côtés gauche et droit de ladite semi-remorque. Dans ce cas, ce pourcentage pourra être plus élevé que les vingt-cinq pourcent évoqués précédemment.

De façon générale, quel que soit le procédé de détection de situation de sous pression selon un objet de l'invention, on peut appliquer un facteur correctif à chacune des mesures d'aire de contact, ou à chacune des moyennes calculées à partir de ces mesures d'aire de contact, ou à chaque résultat de calcul effectué à partir des mesures d'aire de contact des pneumatiques du véhicule avant d'effectuer une comparaison. Ceci permet d'éviter toute fausse détection de situation de sous pression. Le coefficient à appliquer peut être réglé préalablement selon le type de véhicule, le type d'essieu et/ou la position de chaque pneumatique dudit véhicule pour lequel on mesure une aire de contact afin de détecter d'éventuelles situation de sous pression.

Pour ce faire, dans un mode de réalisation préférentiel, un procédé selon l'invention est mis en oeuvre en utilisant un système d'évaluation de l'aire de contact d'un véhicule, le système comprenant :

- un système d'évaluation de l'état d'un pneumatique comportant un boitier posé au sol,

- des moyens pour déterminer au moins un temps de passage du véhicule sur un point de passage du boitier du système d'évaluation, et

- des moyens pour calculer, en fonction du temps de passage du véhicule et de la vitesse du véhicule, au moins une longueur d'aire de contact locale d'au moins un pneumatique du véhicule.

De manière préférentielle, le système d'évaluation de l'état d'un pneumatique est un système de mesure de l'usure comportant un boitier posé au sol dans lequel sont avantageusement installés :

- Un dispositif de détection d'usure d'un pneumatique,

- Un dispositif de détection de la présence d'un pneumatique sur le boitier, et

- Des moyens électroniques d'activation du dispositif de détection d'usure lors de la détection de la présence d'un pneumatique.

Le dispositif de détection d'usure met en oeuvre préférentiellement un capteur placé à l'intérieur du boitier, à proximité d'une face du boitier destinée à être en contact avec la surface du pneumatique, et capable de mesurer la distance qui sépare ledit capteur des armatures métalliques constituant le pneumatique.

Le capteur comporte par exemple une source de champ magnétique statique ou alternatif et un élément sensible adjacent, la source étant une bobine ou un aimant permanent et l'élément sensible un capteur dont le signal de sortie peut, par exemple, être fonction du niveau du champ d'induction magnétique local. Dans ce cas, l'élément sensible est positionné de telle sorte que l'intensité du champ magnétique varie lorsque la distance diminue. L'élément sensible est préférablement choisi dans le groupe des capteurs à effet Hall ou magnéto résistif.

Dans un autre exemple le capteur peut être un capteur à courants de Foucault.

De manière préférentielle, le système d'évaluation de l'aire de contact est tel que les moyens pour mesurer un temps de passage du véhicule sur un point de passage du boitier dudit système d'évaluation comportent une ligne de capteurs installée perpendiculairement au sens de roulage du véhicule sur le boitier. Les capteurs mis en oeuvre à cet effet sont, par exemple les capteurs d'un dispositif de mesure de l'usure, tel qu'explicité précédemment.

De manière préférentielle, le système d'évaluation de l'aire de contact comprend des moyens pour calculer la vitesse du véhicule.

Par exemple, la vitesse est calculée en fonction du temps de passage du véhicule sur le boitier du système d'évaluation de l'état d'un pneumatique, et de données dimensionnelles du boitier et/ou du véhicule.

Dans une réalisation particulière, le système d'évaluation de l'aire de contact comprend des moyens de stockage des données dimensionnelles du boitier utiles au calcul de la vitesse. Ces données dimensionnelles comprennent, notamment mais pas exclusivement, les distances entre différents éléments incorporés dans le boitier, par exemple des capteurs piézoélectriques, des câbles piézoélectriques, ou des électrodes recouvertes de peinture piézoélectrique. Par « distance », on entend ici la distance entre les projections respectives des éléments sur un même plan, parallèle au sol sur lequel roule le véhicule dont la vitesse est calculée.

Dans une réalisation particulière, le système d'évaluation de l'aire de contact met en oeuvre des moyens d'identification du véhicule, utiles au calcul de la vitesse. Ces moyens sont, par exemple, un lecteur RFID, intégré dans ou sur le boitier, ou à proximité. Un tel lecteur peut permettre de lire l'identifiant d'une puce RFID intégrée dans un ou plusieurs pneus du véhicule ou apposé sur le châssis dudit véhicule. Ce lecteur de puces RFID est préférentiellement lié par des moyens de télécommunications à une base de données distante permettant d'établir un lien entre une puce RFID et un pneumatique et/ou un véhicule. De cette manière, il est possible d'échanger des informations dimensionnelles et qualitatives sur le véhicule identifié avec ladite base de données distante.

Les informations dimensionnelles comprennent, par exemple, la dimension des pneumatiques, l'empattement, la voie avant ou la voie arrière du véhicule.

Les informations qualitatives comprennent par exemple le type de véhicule, l'usage qui en est fait et plus largement tout type d'information permettant de déterminer quel facteur correctif doit être appliqué à chaque aire de contact, à chaque moyenne ou à chaque résultat de calcul effectué à partir des mesures d'aire de contact obtenues à partir du système d'évaluation de l'aire de contact.

Dans une réalisation particulière, le système d'évaluation de l'aire de contact met en oeuvre le dispositif de détection de la présence d'un pneumatique appartenant au système d'évaluation de l'état d'un pneumatique, afin de permettre le calcul de la vitesse. Ledit dispositif de détection de la présence d'un pneumatique comprend au moins un élément compris dans le groupe comprenant : un capteur de type ferroelectret (PP, CYTOP, etc), un capteur piézoélectrique organique, un câble et/ou fibre piézoélectrique, un transducteur piézoélectrique, un bilame piézoélectrique ou un capteur réalisé sous forme de composite piézoélectrique inorganique appliqué sur un support. Le composite piézoélectrique peut, par exemple, être une peinture additionnée de titanate de baryum, oxyde connu pour ses propriétés ferroélectriques. Tout autre élément possédant des propriétés ferroélectriques, comme par exemple et de façon non exhaustive, le TGS, le PZT, le BST, le KNbO3, le LiNbO3, le LiTaO3, pourrait être utilisé comme additif à une peinture classique pour former un composite piézoélectrique utilisable dans le cadre du présent dispositif.

Dans une autre réalisation particulière, le dispositif de détection de présence de pneumatique comprend au moins un élément compris dans le groupe comprenant : un accéléromètre, un capteur de tilt ou de vibration omnidirectionnel (par exemple de type SQ-SEN-200 de la société SignalQuest), ou une jauge de contrainte collée en un point de la structure du boitier.

De manière préférentielle, le système comprend en outre des moyens pour déterminer plusieurs longueurs d'aire de contact locales pour chaque pneumatique du véhicule, chaque longueur d'aire de contact locale étant déterminée en fonction du temps de passage du pneumatique sur un capteur de la ligne de capteur.

De manière préférentielle, le système comprend des moyens pour reconstituer la forme d'aire de contact du pneumatique en fonction des longueurs d'aire de contact locales dudit pneumatique.

Dans un exemple, ces moyens de reconstitution comprennent des moyens de transmission des longueurs d'aire de contact locales à un serveur distant.

Dans un autre exemple, ces moyens de reconstitution comprennent en outre des moyens permettant le recalage temporel des longueurs d'aire de contact locales les unes par rapport aux autres, en fonction d'un décalage temporel introduit au moment de la détermination des temps de passage correspondants à chaque longueur d'aire de contact locale.

## DESCRIPTION DETAILLEE DE L'INVENTION

D'autres avantages et modes de réalisation de l'invention apparaîtront avec la description détaillée des figures, effectuée à titre non limitatif, notamment

- les figures la, 1b, 1c et 1d qui montrent un exemple de système d'évaluation de l'aire de contact d'un pneumatique, permettant la mise en oeuvre d'un procédé selon l'invention,

- Les figures 2a et 2b montrent un exemple d'application d'un procédé selon l'invention pour un véhicule de tourisme

- Les figures 3a à 3d un exemple d'application d'un procédé selon l'invention pour un véhicule poids-lourd.

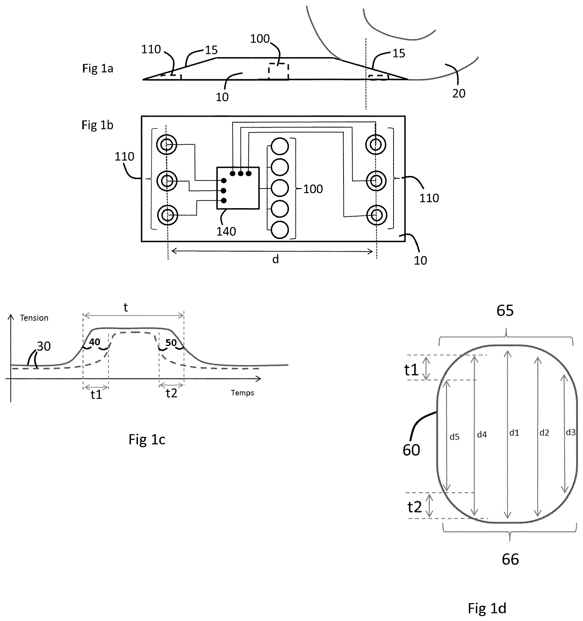

Le système d'évaluation de l'aire de contact d'un pneumatique montré sur les figures 1a et 1b est constitué:

- d'un boîtier 10 constitué de deux rampes d'accès 15 et d'une zone de mesure de l'usure horizontale située entre les deux rampes d'accès 15.

- de deux dispositifs de détection de présence de pneumatique constitués chacun de trois capteurs piézoélectriques 110, positionnés le long d'une ligne transversale au sens de roulage d'un véhicule arrivant sur le boîtier. Dans cet exemple, les capteurs piézoélectriques sont des buzzers collés sur la structure du boitier 10.

- d'une ligne de capteurs de mesure d'usure 100 positionnés le long d'une ligne transversale au sens du roulage du véhicule arrivant sur le boitier 10. Ces capteurs de mesure de l'usure peuvent être de façon indifférente des capteurs à reluctance variable, ou des capteurs à courants de Foucault. Alternativement on peut également remplacer ces capteurs d'usure électromagnétique par des capteurs optique appliquant le principe de la triangulation laser.

- d'une électronique de traitement 140 sur laquelle sont connectés les capteurs de mesure de l'usure 100 et les capteurs de détection de présence de pneumatique 110. Dans cet exemple, l'électronique de traitement 140 contient également un lecteur de RFID permettant la lecture des puces RFID intégrées dans les pneumatiques ou collées sur le véhicule dont l'usure des pneumatiques et la vitesse sont mesurées, et dont les aires de contact des pneumatiques sont évaluées.

Lors du passage d'un pneumatique 20 sur le boitier 10 du système de mesure de l'usure, la présence du pneumatique est d'abord détectée par une première ligne de capteur de détection de présence de pneumatique, puis, lorsque le pneumatique quitte le boitier 10 du système de mesure de l'usure, sa présence est détectée par une seconde ligne de capteurs de détection de présence de pneumatique. La distance entre les deux dispositifs de détection de présence de pneumatique étant connue, il est alors possible de calculer la vitesse du pneumatique par une formule très simple : Vitesse moyenne = d/t0

Dans cette formule, la distance d est la distance séparant les deux lignes transversales de capteurs de détection de présence de pneumatique 110, et le temps t0 est le temps écoulé entre la détection du pneumatique par le premier capteur de détection de présence de pneumatique et la détection par le second capteur de détection de présence de pneumatique.

La figure 1c montre, en trait continus et discontinus, deux exemples de signaux 30 relevés à la sortie de deux capteurs 100 de mesure de l'usure lors du passage d'un pneumatique à la verticale desdits capteurs de mesure de l'usure 100. La vitesse du pneumatique étant connue, il est alors très aisé de mesurer la longueur locale de l'air de contact du pneumatique, à la verticale du capteur d'usure considéré. Dans le cas du capteur dont le signal de sortie est représenté en trait continu, la formule à appliquer est :

$$\text{Longueur ADC locale} = \text{Vitesse moyenne} * t = d*t/t0$$

Dans cette formule, la valeur du temps t, est mesurée au moyen de l'électronique de traitement 140 qui est, par exemple, munie d'une détection de seuil. Le temps t est alors le temps s'écoulant entre le premier franchissement de seuil 40 par le signal de sortie du capteur de mesure de l'usure considéré, et le second franchissement de seuil 50 par le signal de sortie du capteur de mesure de l'usure considéré.

Ainsi qu'indiqué précédemment, dans cet exemple on utilise une ligne de capteurs de mesure de l'usure 100, installée perpendiculairement au sens de roulage du véhicule, pour mesurer l'usure des pneumatiques lors du passage d'un véhicule.

Les capteurs composants cette ligne de capteurs de mesure de l'usure 100 étant avantageusement, suffisamment proche les uns des autres, il est possible de réaliser plusieurs mesures d'usure dans la largeur de l'aire de contact.

Par exemple, dans le cas d'une bande de roulement de vingt centimètres de large, si les capteurs sont disposés tous les deux centimètres le long d'une ligne transversale au sens de roulage du pneumatique, neuf capteurs au moins pourront réaliser une mesure d'usure dans la largeur dudit pneumatique. Dans ce cas, neuf mesures de longueur locale d'aire de contact pourront être réalisées comme il est décrit précédemment.

Une fois les mesures de longueur d'aire de contact locales réalisées, elles sont par exemple transmises à un serveur distant en utilisant des moyens de transmission, par exemple par radio fréquence, intégrés à l'électronique de traitement 140. On peut alors mettre en oeuvre des moyens pour reconstituer la forme de l'aire de contact, et exploiter cette forme, par exemple en l'exposant sur un site web à destination d'un gestionnaire de flotte de véhicules.

La figure 1d montre un exemple d'aire de contact 60 reconstituée par ce procédé. Dans cet exemple, le pneumatique concernée a une bande de roulement suffisamment large pour permettre la réalisation de cinq mesures de longueur locales de l'aire de contact dans la largeur de l'aire de contact dudit pneumatique.

Dans cet exemple, les longueurs d1, d2, d3, d4 et d5 sont les longueurs d'aire de contact locales mesurées à l'aide des capteurs d'usure, comme décrit dans les figures la et 1b.

Lors de l'arrivée d'un pneumatique sur le système décrit dans les figures la et 1b, les signaux de sortie des capteurs 100 utiles pour la mesure de l'usure, car disposés face à l'aire de contact du pneumatique, ne franchiront pas tous simultanément le seuil 40 repéré sur la figure 1c. Ce décalage temporel t1 est illustré sur la figure 1c, entre les deux signaux de sortie 30.

De même, ces signaux de sortie 30 ne franchiront pas non plus simultanément le seuil 50 repéré sur la figure 1c. Dans le cas exposé dans la figure 1c, il y a un temps t2 qui s'écoule entre les deux franchissements de seuils 50.

Ceci s'explique par la forme de l'aire de contact des pneumatiques, qui n'est pas toujours un rectangle parfait, mais peut, par exemple, avoir une forme plus arrondie, par exemple dans sa partie avant 65 et dans sa partie arrière 66, comme le montre le dessin de la figure 1d.

Dans ce cas, pour la reconstruction de l'aire de contact, il est utile de tenir compte de ces décalages temporels t1 et t2 entre l'ensemble des signaux de sortie des capteurs d'usure, afin que la forme réelle de l'aire de contact puisse être représentée correctement comme c'est le cas dans la figure 1d.

Dans la figure 1d, les longueurs d'aire de contact locales d5 et d4 correspondent aux signaux de sortie 30 exposés dans la figure 1c. La courbe 30 en trait continu correspondant à la longueur d'aire de contact locale d4 et la courbe 30 en traits discontinus correspondant à la longueur d'aire de contact locale d5. Pour illustrer l'effet des décalages temporels t1 et t2 de la figure 1c, sur la géométrie de l'aire de contact 60, on a reporté les décalages t1 et t2 de la figure 1c, sur la figure 1d.

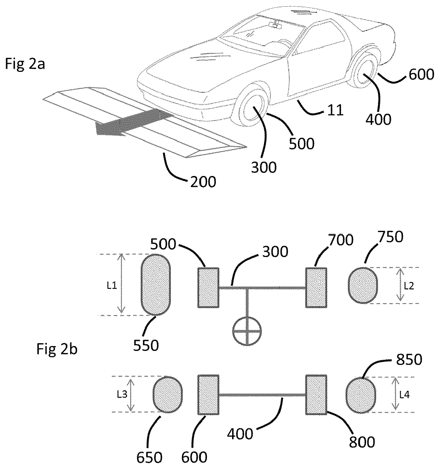

Les figures 2a et 2b montrent le résultat des mesures de longueurs et formes d'aire de contact obtenues lorsqu'un véhicule de tourisme 11 muni de deux essieux 300 et 400, passe sur un système de mesure de l'usure 200 ayant les mêmes fonctionnalités que le système 10décrit dans les figures 1a et 1b.

Dans le cas des figures 2a et 2b, le pneumatique 500 situé à l'extrémité gauche de l'essieu 300 est en situation de sous pression. Le pneumatique 700, situé à l'autre extrémité de l'essieu 300 est gonflé à pression nominale

La figure 2b montre respectivement les formes d'aires de contact 550, 650, 750 et 850 des pneumatiques 500, 600, 700 et 800. Dans cet exemple, la longueur L1 de l'aire de contact 550 du pneumatique 500 est supérieure à la longueur L2 de l'aire de contact 750 du pneumatique 700.

Dans cet exemple, il est possible de détecter le sous gonflage par comparaison des longueurs d'aire de contact L1 et L2. Alternativement, on peut également comparer la surface S1 de l'aire de contact 550 avec la surface S2 de l'aire de contact 750.

Dans le cas des figures 2a et 2b, pour éviter la remontée de fausses alertes on signalera préférentiellement à l'utilisateur une sous pression probable du pneumatique 500 si le produit de S1 par un coefficient x, est supérieur ou égal à S2 ou si le produit de L1 par un coefficient y, est supérieur ou égal à L2. Dans ces formules, x et y sont des coefficients préférentiellement inférieur à un, dont la valeur peut-être avantageusement fixée en fonction du type de véhicule ou de son usage.

Dans le cas où le pneumatique 700 serait sous gonflé, alors il faudrait inverser les formules précédentes et alerter le conducteur si le produit de S2 par un coefficient x, est supérieur ou égal à S1 ou si le produit de L2 par un coefficient y, est supérieur ou égal à L1.

Pour détecter une sous pression forte d'un pneumatique situé sur l'essieu arrière 400 du véhicule de tourisme 11, on effectuera une comparaison des longueurs, ou surfaces, d'aires de contact des pneumatiques 600 et 800 situés de part et d'autre de l'essieu 400.

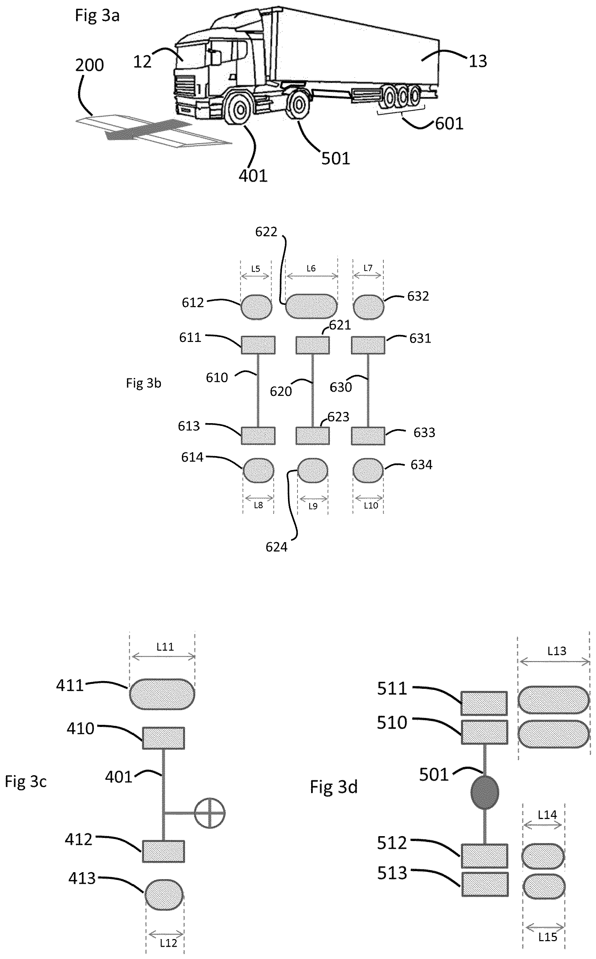

Les figures 3a 3b, 3c et 3d montrent le résultat de mesures de longueur d'aire de contact obtenus lorsqu'un convoi constitué d'un tracteur 12 et d'une semi-remorque 13, passe sur un système de mesure de l'usure 200 tel que décrit dans la figures 2a.

Dans ces exemples, le tracteur 12 est constitué d'un essieu avant 401 et d'un essieu arrière 501 et la semi-remorque 13 est constituée d'un groupe de trois essieux 601. En outre, l'essieu arrière 501 du tracteur 12 est muni de deux pneumatiques « jumelés » à chacune de ses extrémités.

Dans les exemples des figures 3a 3b, 3c et 3d, différentes situation de sous gonflage de pneumatiques sont illustrées :

- La figure 3b montre le résultat de mesures de longueurs d'aires de contact lorsque le pneumatique 621 de l'essieu central 620 de la semi-remorque 13 est en situation de sous gonflage.

- La figure 3c montre le résultat de mesures de longueurs d'aires de contact lorsque le pneumatique 410 de l'essieu 401 du tracteur 12 est en situation de sous gonflage.

- La figure 3d montre le résultat de mesures de longueurs d'aires de contact lorsque le pneumatique 510 de l'essieu 501 du tracteur 12 est en situation de sous gonflage.

Dans le cas de la figure 3b, le pneumatique 621 situé à l'extrémité droite de l'essieu 620 de la semi-remorque 13 est en situation de sous pression. Cette sous pression peut être détectée par simple comparaison des longueurs, ou surface, d'aire de contact des pneumatiques situés de part et d'autre du même essieu. Ainsi, dans cet exemple et en première approximation, il suffit, par exemple, de comparer les longueurs L6 et L9 des aires de contact des pneumatiques 621 et 623 afin de détecter la sous pression probable du pneumatique 621.

Dans le cas de l'exemple illustré dans la figure 3b, si on calcule la valeur moyenne des longueurs d'aire de contact sur le côté droit de la semi-remorque, on obtiendra une valeur plus élevée que dans le cas où on réaliserait le même calcul pour le côté gauche de la semi-remorque car le pneumatique 621 est situé sur le côté droit de ladite semi-remorque.

Dans une seconde étape, sur le côté présentant la valeur moyenne de longueur d'aire de contact la plus élevée, on peut déterminer quel pneumatique est le moins gonflé en sélectionnant celui pour lequel la valeur de longueur, ou de surface, d'aire de contact est la plus élevée.

Une dernière méthode, plus simple, consiste à sélectionner directement le pneumatique le moins gonflé en recherchant la valeur de longueur, ou de surface, d'aire de contact la plus élevée parmi la totalité des pneumatiques de la semi-remorque.

En tout état de cause, ces pneumatiques étant utilisés sur une semi-remorque utilisée pour transporter du fret, les longueurs, ou surfaces, d'aire de contact des pneumatiques positionnés sur les essieux 610, 620 et 630 sont sensibles à la répartition des masses dans ladite semi-remorque.

Pour pallier à ce problème, on peut décider d'alerter le conducteur uniquement lorsque la comparaison des longueurs d'aire de contact des pneumatiques situés de part et d'autre de l'essieu conduit à une différence supérieur à x%, le coefficient x étant fixé en tenant compte du type de fret transporté avec le véhicule concerné.

Par exemple, dans le cas de convoyage de citerne, il n'est pas possible d'avoir une mauvaise répartition de charge entre la droite et la gauche de la semi-remorque. Dans ce cas, le coefficient x pourra être inférieur aux situations dans lesquelles une mauvaise répartition de charge entre la gauche et la droite est possible.

Dans le cas de la figure 3c, le pneumatique 410 situé sur le côté droit de l'essieu 401 du tracteur 12cest en situation de sous pression. Cette sous pression peut être détectée par simple comparaison des longueurs, ou surface, d'aire de contact des pneumatiques situés de part et d'autre dudit essieu 401.

Dans le cas des essieux avant de tracteur, l'essentiel de la masse reposant sur ces essieux provient du moteur qui est situé à la verticale desdits essieux. Ainsi, la part de charge transportée, influant sur la longueur ou surface d'aire de contact des pneumatiques de ces essieux est très faible devant la masse du tracteur lui-même, et il en ressort une plus grande sensibilité de l'évaluation de sous pression par comparaison de longueur ou surface d'aire de contact.

Ainsi, dans cet exemple, Il sera possible d'alerter le conducteur, dès qu'une différence minime apparaitra entre les longueurs L11 et L12, ou surfaces correspondantes, d'aires de contact des deux pneumatiques 410 et 413 de l'essieu 401.

Par comparaison avec l'exemple de la figure 3b, le pourcentage « coefficient de sécurité » permettant d'éviter l'envoi de fausses alertes pourrait être fixé à dix pourcent. Ainsi, dès que la longueur, ou surface, d'aire de contact d'un des pneumatiques dépasserait de dix pourcent la longueur, ou surface, d'aire de contact du second pneumatique de l'essieu, une alerte serait envoyée au conducteur lui demandant de vérifier la pression de ses pneumatiques.

Dans le cas de la figure 3d, seul le pneumatique 510 situé sur le côté droit de l'essieu 501 du tracteur est en situation de sous pression. S'agissant de pneumatiques jumelés, l'accroissement de longueur ou de surface d'aire de contact consécutif à une sous pression sur un des pneumatique jumelé va se répartir entre les deux pneumatiques du côté concerné par la sous pression. Ainsi, même si un unique pneumatique 510 est en situation de sous pression, c'est bien la longueur, et surface d'aire de contact des pneumatiques 510 et 511 qui va évoluer à la hausse, jusqu'à une longueur L13, comme le montre la figure 3d.

La sensibilité à une éventuelle sous pression d'un pneumatique est donc largement inférieure aux cas où l'essieu est équipé en monte simple de pneumatique.

Dans ce cas, il est bénéfique d'effectuer l'analyse à partir de relevés de longueurs et surfaces d'aire de contact obtenus en condition de charge élevée sur ledit essieu jumelé. De cette façon, l'augmentation de longueur ou de surface d'aire de contact sera plus sensible et il deviendra possible d'alerter le conducteur avec un risque de fausse alerte moins important.

Comme dans les cas précédents, un effet de mauvaise répartition de charge entre la gauche et la droite de la remorque attelée sur le tracteur dont l'essieu moteur fait l'objet d'une analyse de longueur ou de surface d'aire de contact, peut altérer la conclusion et conduire à une fausse alerte.

Pour pallier à ce problème, on peut, comme dans les cas précédents, décider d'alerter le conducteur uniquement lorsque la comparaison des longueurs d'aire de contact des pneumatiques situés de part et d'autre de l'essieu conduit à une différence supérieur à x%, le coefficient x étant fixé en tenant compte du type de fret transporté par le véhicule concerné.

Par exemple, dans le cas de convoyage de citerne, il n'est pas possible d'avoir une mauvaise répartition de charge entre la droite et la gauche du convoi. Dans ce cas, le coefficient x pourra être inférieur aux situations pour lesquelles une mauvaise répartition de charge entre la gauche et la droite est possible.

## Revendications

1. Procédé de détection de l'état de sous-gonflage d'un pneumatique installé sur un véhicule, le procédé comprenant les étapes suivantes :

   - l'étape de déterminer une première mesure d'aire de contact d'un premier pneumatique installé sur le véhicule,
   - l'étape de déterminer une deuxième mesure d'aire de contact d'un deuxième pneumatique installé sur le véhicule,
   - l'étape de comparer la première et deuxième mesure d'aire de contact et d'en déduire une situation de sous-gonflage si l'écart entre les deux mesures est supérieure à un seuil d'alerte prédéterminé.

2. Procédé de détection selon la revendication 1, dans lequel la mesure d'aire de contact est une mesure de longueur d'aire de contact, et/ou une mesure de surface d'aire de contact.

3. Procédé de détection selon l'une des revendications précédentes, destiné à être appliqué à un véhicule comportant au moins un essieu avec un premier et second pneumatique jumelés sur un premier côté du véhicule et un troisième et un quatrième pneumatiques jumelés sur le second côté du véhicule, le procédé comprenant en outre les étapes suivantes :

   - l'étape de déterminer une troisième et quatrième mesure d'aire de contact des troisième et quatrième pneumatiques,
   - l'étape de calculer une première et une deuxième moyenne des mesures d'aire de contact des pneumatiques situés respectivement sur le premier et le deuxième côté du véhicule,
   - l'étape de comparer la première et la seconde moyenne pour déterminer un côté du véhicule comportant un pneu en situation de sous-gonflage.

4. Procédé de détection selon la revendication 3, comprenant en outre l'étape de comparer les mesures d'aire de contact des pneumatiques situés sur le côté du véhicule déterminé au préalable, pour déterminer le pneumatique en situation de sous-gonflage.

5. Procédé de détection selon l'une des revendications 1 ou 2, destiné à être appliqué à un véhicule comportant au moins un troisième et quatrième pneumatique monté sur au moins un essieu additionnel sans pneumatiques jumelés, le procédé comprenant en outre les étapes suivantes :

   - l'étape de déterminer la totalité des mesure d'aire de contact de la totalité des pneumatiques montés sur les essieux non jumelés,
   - l'étape de calculer une première et une deuxième moyenne des mesures d'aire de contact des pneumatiques situés respectivement sur le premier et le deuxième côté du véhicule,
   - l'étape de comparer la première et la seconde moyenne pour déterminer un côté du véhicule comportant un pneu en situation de sous-gonflage.

6. Procédé de détection selon la revendication 5, comprenant en outre l'étape de comparer les mesures d'aire de contact des pneumatiques situés sur le côté du véhicule déterminé au préalable, pour déterminer le pneumatique en situation de sous-gonflage.

7. Procédé de détection selon l'une des revendications précédentes, comprenant l'étape d'appliquer un facteur correctif sur au moins une mesure ou au moins une moyenne avant l'étape de comparaison.

8. Procédé de détection selon la revendication 7, dans lequel le facteur correctif est déterminé en fonction d'une activité du véhicule, par exemple son type de chargement.

**9.** Procédé de détection selon les revendications 7 ou 8, dans lequel le facteur correctif est déterminé en fonction de la monte du pneumatique.

**10.** Procédé de détection selon l'une des revendications 7 à 9, dans lequel le facteur correctif est déterminé en fonction de la position du pneumatique sur le véhicule.

**11.** Procédé de détection selon l'une des revendications précédentes, comprenant l'étape d'envoyer un signal d'alerte au conducteur du véhicule et/ou à un serveur distant.

**12.** Procédé de détection selon la revendication 11, dans lequel l'étape d'alerter le conducteur est mis en oeuvre après plusieurs détection successives d'une situation de sous-gonflage.


**Patentansprüche**

**1.** Verfahren zur Feststellung des Unterdruckzustands eines Reifens, der auf einem Fahrzeug installiert ist, wobei das Verfahren die folgenden Schritte umfasst:

- Schritt des Bestimmens eines ersten Berührungsflächenmaßes eines ersten Reifens, der auf dem Fahrzeug installiert ist,
- Schritt des Bestimmens eines zweiten Berührungsflächenmaßes eines zweiten Reifens, der auf dem Fahrzeug installiert ist,
- Schritt des Vergleichens des ersten und des zweiten Berührungsflächenmaßes und Ableiten daraus einer Unterdrucksituation, falls der Unterschied zwischen den zwei Maßen größer ist als ein vorbestimmter Warnschwellenwert.

**2.** Verfahren zur Feststellung nach Anspruch 1, wobei das Berührungsflächenmaß ein Berührungsflächenlängenmaß und/oder ein Berührungsoberflächenmaß ist.

**3.** Verfahren zur Feststellung nach einem der vorhergehenden Ansprüche, das dazu bestimmt ist, an ein Fahrzeug angewandt zu werden, das mindestens eine Achse mit einem ersten und zweiten Luftreifen umfasst, die auf einer ersten Seite des Fahrzeugs gepaart sind, und einem dritten und vierten Luftreifen, die auf einer zweiten Seite des Fahrzeugs gepaart sind, wobei das Verfahren außerdem die folgenden Schritte umfasst:

- Schritt des Bestimmens eines dritten und vierten Berührungsflächenmaßes des dritten und vierten Reifens,
- Schritt des Berechnens eines ersten und zweiten Durchschnitts der Berührungsflächenmaße der Reifen, die jeweils auf der ersten und der zweiten Seite des Fahrzeugs liegen,
- Schritt des Vergleichens des ersten und des zweiten Durchschnitts, um eine Seite des Fahrzeugs zu bestimmen, die einen Reifen in Unterdrucksituation umfasst.

**4.** Verfahren zur Feststellung nach Anspruch 3, das außerdem den Schritt des Vergleichens der Berührungsflächenmaße der Reifen, die auf der zuvor bestimmten Seite des Fahrzeugs liegen, umfasst, um den Reifen in Unterdrucksituation zu bestimmen.

**5.** Verfahren zur Feststellung nach einem der Ansprüche 1 oder 2, das dazu bestimmt ist, an ein Fahrzeug angewandt zu werden, das mindestens einen dritten und vierten Reifen umfasst, die auf mindestens eine zusätzliche Achse ohne gepaarte Reifen montiert sind, wobei das Verfahren außerdem die folgenden Schritte umfasst:

- Schritt des Bestimmens der Summe der Berührungsflächenmaße der Summe der Reifen, die auf die nicht gepaarten Achsen montiert sind,
- Schritt des Berechnens eines ersten und eines zweiten Durchschnitts der Berührungsflächenmaße der Reifen, die jeweils auf der ersten und der zweiten Seite des Fahrzeugs liegen,
- Schritt des Vergleichens des ersten und zweiten Durchschnitts, um eine Seite des Fahrzeugs zu bestimmen, die einen Reifen in Unterdrucksituation umfasst.

**6.** Verfahren zur Feststellung nach Anspruch 5, das außerdem den Schritt des Vergleichens der Berührungsflächenmaße der Reifen, die auf der Seite des Fahrzeugs, die zuvor bestimmt wurde, liegen, umfasst, um den Reifen in Unterdrucksituation zu bestimmen.

7. Verfahren zur Feststellung nach einem der vorhergehenden Ansprüche, das den Schritt des Anwendens eines Korrekturfaktors auf mindestens ein Maß oder mindestens einen Durchschnitt vor dem Vergleichsschritt umfasst.

8. Verfahren zur Feststellung nach Anspruch 7, wobei der Korrekturfaktor in Abhängigkeit von einer Aktivität des Fahrzeugs, zum Beispiel von seinem Ladetyp, bestimmt wird.

9. Verfahren zur Feststellung nach Anspruch 7 oder 8, wobei der Korrekturfaktor in Abhängigkeit von der Montage des Reifens bestimmt wird.

10. Verfahren zur Feststellung nach einem der Ansprüche 7 bis 9, wobei der Korrekturfaktor in Abhängigkeit von der Position des Reifens auf dem Fahrzeug bestimmt wird.

11. Verfahren zur Feststellung nach einem der vorhergehenden Ansprüche, das den Schritt des Sendens eines Warnsignals zu dem Fahrer des Fahrzeugs und/oder zu einem entfernten Server umfasst.

12. Verfahren zur Feststellung nach Anspruch 11, wobei der Schritt des Warnens des Fahrers nach mehreren aufeinanderfolgenden Feststellungen einer Unterdrucksituation umgesetzt wird.

**Claims**

1. Method for detecting the underflation state of a tyre fitted on a vehicle, the method comprising the following steps:

   - the step of determining a first contact patch measurement of a first tyre fitted on the vehicle,
   - the step of determining a second contact patch measurement of a second tyre fitted on the vehicle,
   - the step of comparing the first and second contact patch measurements and of inferring an underinflation situation therefrom if the difference between the two measurements is greater than a predetermined signalling threshold.

2. Detection method according to Claim 1, wherein the measurement of the contact patch is a contact patch length measurement, and/or a contact patch area measurement.

3. Detection method according to one of the preceding claims, intended to be applied to a vehicle having at least one axle with a first and second tyres twin-mounted on a first side of the vehicle and a third and a fourth tyre twin-mounted on the second side of the vehicle, the method also comprising the following steps:

   - the step of determining a third and fourth contact patch measurements of the third and fourth tyres,
   - the step of calculating a first and a second average of the contact patch measurements of the tyres situated on the first and the second side, respectively, of the vehicle,
   - the step of comparing the first and the second average in order to determine a side of the vehicle that has a tyre in an underinflation situation.

4. Detection method according to Claim 3, also comprising the step of comparing the contact patch measurements of the tyres situated on the side of the vehicle determined beforehand, in order to determine the tyre that is in an underinflation situation.

5. Detection method according to either of Claims 1 and 2, intended to be applied to a vehicle having at least a third and fourth tyres mounted on at least one additional axle without twin-mounted tyres, the method also comprising the following steps:

   - the step of determining all of the contact patch measurements of all of the tyres mounted on the non-twin-mounted axles,
   - the step of calculating a first and a second average of the contact patch measurements of the tyres situated on the first and the second side, respectively, of the vehicle,
   - the step of comparing the first and the second average in order to determine a side of the vehicle that has a tyre in an underinflation situation.

6. Detection method according to Claim 5, also comprising the step of comparing the contact patch measurements of the tyres situated on the side of the vehicle determined beforehand, in order to determine the tyre that is in an underinflation situation.

7.  Detection method according to one of the preceding claims, comprising the step of applying a corrective factor to at least one measurement or at least one average before the comparison step.

8.  Detection method according to Claim 7, wherein the corrective factor is determined depending on an activity of the vehicle, for example its type of load.

9.  Detection method according to Claim 7 or 8, wherein the corrective factor is determined depending on the mounting of the tyre.

10. Detection method according to one of Claims 7 to 9, wherein the corrective factor is determined depending on the position of the tyre on the vehicle.

11. Detection method according to one of the preceding claims, comprising the step of sending a warning signal to the driver of the vehicle and/or to a remote server.

12. Detection method according to Claim 11, wherein the step of warning the driver is implemented following several successive detections of an underinflation situation.

Fig 1a

110  15  100  15

10  20

Fig 1b

110

100

140

110

10

d

t

Tension

30  40  50

t1  t2

Temps

Fig 1c

65

t1

60  d5  d4  d1  d2  d3

t2

66

Fig 1d

Fig 2a

Fig 2b

Fig 3a

200

12

13

601

501

401

---

Fig 3b

622

L5    L6    L7

612    621    632

611    631

610    620    630

613    623    633

614    624    634

L8    L9    L10

---

Fig 3c

L11

411

410

401

412

413

L12

---

Fig 3d

L13

511

510

501

512

513

L14

L15

**EP 3 233 540 B1**

**RÉFÉRENCES CITÉES DANS LA DESCRIPTION**

**Documents brevets cités dans la description**

- WO 2006098714 A1